# EUROPEAN PATENT APPLICATION

(11) **EP 4 113 286 A2**
(43) Date of publication of application: **04.01.2023**
(21) Application number: 22181094.8
(22) Date of filing: 24.06.2022
(51) Int. Cl.: G06F 8/65

(54) **METHOD OF CONFIGURING AN AUTOMOTIVE CONTROLLER, AUTOMOTIVE CONTROLLER, AND AUTOMOTIVE CONTROLLER SYSTEM**

(30) Priority: 01.07.2021 GB 202109558
(71) Applicant: Aptiv Technologies Limited, St. Michael (BB)
(72) Inventor: BEIER, Ralf A., Dublin, 2 (IE); KOLELIS, Konstantinos, Dublin, 2 (IE)
(74) Representative: Gaunt, Thomas Derrick

(57) **Abstract**

Method of configuring an automotive controller (2) within an EE architecture (10). The automotive controller (2) is connected to other components (7,3,4,5) within the EE architecture (10). An initialisation process (31) is activated in the automotive controller in which the automotive controller determines diagnostic data for identifying other components (7,3,4,5) connected to it within the EE architecture. The diagnostic data is transmitted from the automotive controller (2) to an update controller (9). An identifier is assigned to the automotive controller (2) by the update controller (9) based on a location within the EE architecture (10) determined from the diagnostic data. The software in the automotive controller (2) is then updated based on the determined location.

## Description

### Introduction

The present disclosure relates to a method of configuring an automotive controller, an automotive controller, and an automotive controller system. The present disclosure is also relevant to automotive controller software and update controller software. The present disclosure is particularly relevant to a system for enabling vehicle hardware component discovery to allow for simple initial component installation and subsequent upgrades.

### Background

The electric/electronic (EE) architecture of vehicles has become more complex in recent times. Indeed, with the increasing prevalence of autonomous driving and the integration of enhanced safety and entertainment technologies, it is not uncommon for vehicles now to possess in excess of 150 electronic control units (ECUs). Many of these ECUs are also required to interact and communicate with one another. As such, it is typical to have many of the ECUs in a vehicle specifically manufactured for that particular vehicle configuration. That is, the ECUs for a vehicle will be manufactured with an imprinted Software ID (SWID) and specific I/O connectors for the specific EE architecture in the intended vehicle. This thereby allows peripheral ECUs to communicate with each other and the associated central ECU vehicle controller.

A problem with the above conventional arrangements, however, is that it often prevents parts from being reused. That is, an ECU from one vehicle model can often not be fitted to another vehicle model, even if the hardware is similar, because its configuration may be different.

More recently, there has also been a shift toward zonal EE architectures, where a limited number of ECU zone controllers are used to support both power distribution and data connection requirements within a particular region of the vehicle. Zonal architectures are attractive because they have the potential to provide significant advantages in terms of reductions in complexity and wiring costs. Another significant advantage is the potential to use more standardised components, with the functionality being altered depending on where the component is installed within the vehicle's EE architecture. For instance, it would be desirable to be able to use the same ECU in different vehicle zones and in different vehicles to perform a variety of functions. Not only would this provide an economy of scale benefit, but it would also reduce wastage and simplify subsequent vehicle repairs. However, this is not possible with existing EE architectures.

Accordingly, there is a need for improved systems for addressing the above shortcomings.

### Summary

According to a first aspect, there is provided a method of configuring an automotive controller within an EE architecture including: connecting the automotive controller to other components within the EE architecture; activating an initialisation process in the automotive controller in which the automotive controller determines diagnostic data for identifying other components connected to it within the EE architecture; transmitting the diagnostic data from the automotive controller to an update controller; assigning an identifier to the automotive controller by the update controller based on a location within the EE architecture determined from the diagnostic data; and updating software in the automotive controller based on the determined location.

In embodiments, the diagnostic data further includes specification data indicating specification parameters for the automotive controller.

In embodiments, the step of updating software in the automotive controller includes storing the assigned identifier at the automotive controller.

In embodiments, the step of transmitting the diagnostic data from the automotive controller to an update controller includes a security handshake for establishing secure data transmission between the automotive controller and the update controller.

In embodiments, the step of updating software in the automotive controller includes downloading a software update data from the update controller to a memory in the automotive controller.

In embodiments, the method further includes the step of reporting an error by the update controller if the received diagnostic data from the automotive controller does not correspond to valid diagnostic data stored in a EE architecture data store of the update controller.

According to a second aspect, there is provided an automotive controller including: one or more I/O ports; a processor; a memory for storing instructions for execution by the processor, the instructions including: instructions for implementing an initialisation process in which the automotive controller determines diagnostic data for identifying other components connected to it within the EE architecture through the one or more I/O ports, and instructions for transmitting the diagnostic data to an update controller, instructions for receiving an assigned identifier from the update controller, instructions for receiving software update data from the update controller, wherein the software update data is based on a location within the EE architecture determined from the diagnostic data; and instructions for updating software in the automotive controller using the assigned identifier and software update data.

In embodiments, the one or more I/O ports include a plurality of I/O ports for connection to other components within the EE architecture.

In embodiments, the one or more I/O ports include one or more I/O hub ports for connection to an I/O hub that connects to other components within the EE architecture.

According to a third aspect, there is provided an automotive controller system, including: a plurality of automotive controllers and devices connected in an EE architecture; an update controller for establishing a data connection to one or more of the automotive controllers, wherein the one or more of the automotive controllers are configured to activate an initialisation process for determining diagnostic data identifying other components connected to it within the EE architecture and transmit the diagnostic data to the update controller, and wherein the update controller is configured to determine a location within the EE architecture for each of the one or more automotive controllers based on the diagnostic data, and then assign and transmit a respective identifier and software update data based on the determined location for updating the respective automotive controller.

In embodiments, the one or more of the automotive controllers are standardised and include a memory storing instructions for execution by a processor, the instructions including: instructions for implementing an initialisation process in which the respective automotive controller determines diagnostic data for identifying other components connected to it within the EE architecture; instructions for transmitting the diagnostic data to the update controller; instructions for receiving an assigned identifier from the update controller; instructions for receiving software update data from the update controller, wherein the software update data is based on a location within the EE architecture determined from the diagnostic data; and instructions for updating software in the automotive controller using the assigned identifier and software update data.

According to a fourth aspect, there is provided non-transitory computer readable medium including instructions stored therein for execution by a processor within an automotive controller, the instructions including: instructions for implementing an initialisation process in which the automotive controller determines diagnostic data for identifying other components connected to it within an EE architecture through one or more I/O ports; instructions for transmitting the diagnostic data to an update controller; instructions for receiving an assigned identifier from the update controller; instructions for receiving software update data from the update controller, wherein the software update data is based on a location within the EE architecture determined based on the diagnostic data; and instructions for updating software in the automotive controller using the assigned identifier and the software update data.

According to a fifth aspect, there is provided non-transitory computer readable medium including instructions stored therein for execution by a processor within an update controller, the instructions including: instructions for receiving diagnostic data from an automotive controller, the diagnostic data for identifying other components connected to the automotive controller within an EE architecture through one or more I/O ports; instructions for determining a location of the automotive controller within the EE architecture based on the diagnostic data; instructions for assigning an identifier to the automotive controller based on the determined location; and instructions for transmitting software update data to the automotive controller based on the determined location for updating software in the automotive controller.

### Brief Description of Drawings

Illustrative embodiments will now be described with reference to the accompanying drawings in which:
Figure 1 shows a schematic illustration of a vehicle EE architecture incorporating ECUs according to a first illustrative embodiment;
Figure 2 shows a schematic illustration of an ECU according to a second illustrative embodiment; and
Figure 3 shows an ECU configuration process according to an illustrative embodiment.

### Detailed Description

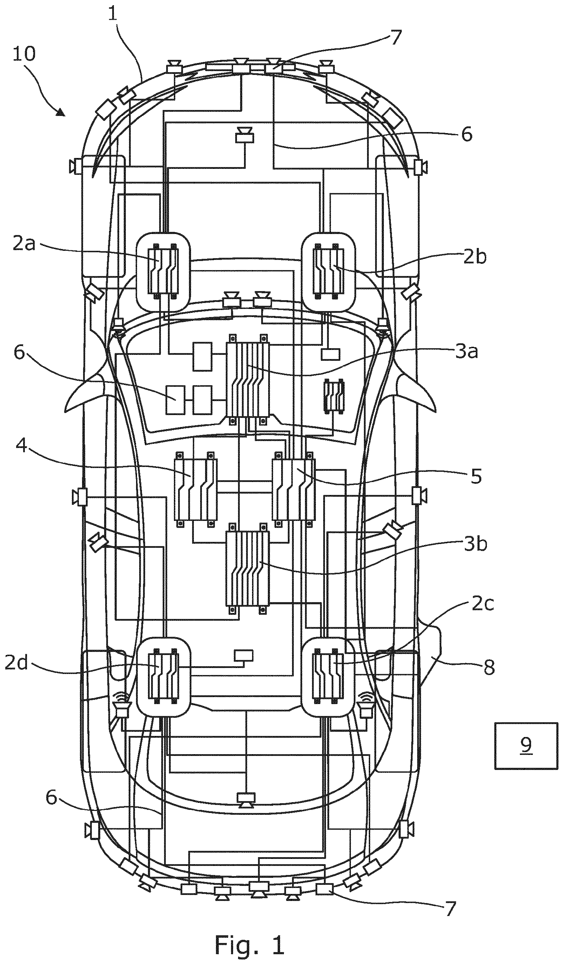

Figure 1 shows a schematic illustration of a zonal vehicle EE architecture 10 including a plurality of components connected by a network of wiring 6. The components include automotive controllers or ECUs, was well as sensor and output devices. In this illustrative example, the EE architecture 1 includes four zone controllers 2a-d which function as hubs to a plurality of devices 7 within a quadrant zone of the vehicle 1. The devices 7 include sensors, such as LiDAR, RADAR, cameras, and ultrasonic sensors, as well as output devices such as speakers, lights and actuators. The devices 7 are connected to the respective zone controller 2c-d within the vehicle zone in which they are located.

The zone controllers 2a-d are in turn connected to a central vehicle controller 5 and open server platforms 3a-b, both of which are in turn connected to a Propulsion and Chassis Controller 4. The open server platforms 3a-b also control displays 6 within the vehicle. The central vehicle controller 5 is connected to an antenna 8 for over-the-air (OTA) communication.

With the above arrangement, the zone controllers 2a-d, central vehicle controller 5, open server platforms 3a-b, and Propulsion and Chassis Controller 4, are powerful Electronic Control Units (ECUs) which perform a variety of functions. The ECUs and devices 7 are networked together through wiring 6.

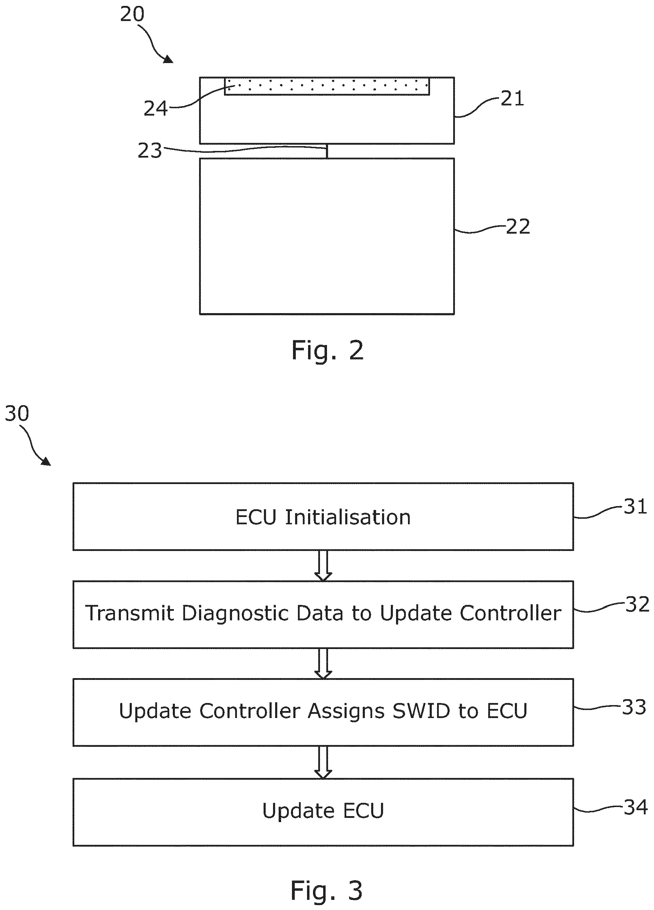

It will be understood that different vehicles may have different EE architectures to the EE architecture 10 shown in figure 1. For example, in other arrangements, two or three zone controllers 2 may be provided, rather than the four zone controllers 2a-d shown in Figure 1. As a consequence, in such EE architectures, the wiring connections 6 between components may be different, even though the ECUs may be similar or identical. To facilitate this, in this embodiment, the ECUs are provided with a plurality of I/O ports to allow them to be connected to one another and to other devices 7 in a variety of configurations. Alternatively, Figure 2 shows a schematic illustration of an alternative arrangement in which the ECU 20 is provided with a separate I/O module 21 to the main processing module 22. In such arrangements, the I/O module 21 may include a plurality of I/O ports 24 tailored to a specific vehicle or location configuration, with different I/O modules being available for different applications. In use, an I/O module 21 is selected depending on the required application, and this is connected to a standardised main processing module 22 via hub connector 23. As such, with both options, all the necessary I/O ports may be provided to allow a standardised ECU to be used in several different vehicle types and locations within the vehicle.

Figure 3 shows an ECU configuration process according to an illustrative embodiment. During vehicle manufacture, the same standardised ECU may be used in multiple locations, for example as any one of zone controllers 2a-d. The ECU unit is provided with base software that is common to all ECU devices of that type, irrespective of its ultimate installation location within the EE architecture.

Once an ECU, for example zone controller 2a, has been installed into the vehicle and has been connected to its associated devices 7 and other ECUs 2b-d,3,5 through its I/O ports and wiring 6, it can be activated to initiate an initialisation step 31, as shown in Figure 3. During the initialisation step 31, the ECU collects diagnostic information regarding its own specification and its surroundings. The specification data may include, for example, information on the ECUs processors, switches, ram, and tmp modules. The surroundings data may include, for example, information on the ECUs connections to other ECUs 2b-d,3,5 and other devices 7, as well as I/O signal characteristics. The surroundings data may be collated in a network graph by the ECUs base software. A number of ECUs may be activated simultaneously such that they undergo their initialisation steps concurrently.

In step 32, the newly activated ECUs transmit their respective diagnostic information to an update controller 9. The update controller 9 includes a data store containing data of the vehicle's ECU infrastructure, as well as the specific vehicle identifier (VIN) for the vehicle 1. As shown in Figure 1, in this embodiment, the update controller 9 is provided outside the vehicle and is connected to the ECUs during the configuration process via a wireless data link through antenna 8. In other embodiments, a wired connection may be used, and alternatively, the update controller 9 may be provided in the vehicle itself. For example, the central vehicle controller 5 may incorporate the integrated update controller 9. The update controller 9 contains pre-stored security keys for secure data communications with the ECUs.

In step 23, the update controller 9 receives the diagnostic information from the ECUs and identifies the required functions of each ECU based on this and its stored ECU infrastructure data. The update controller 9 then assigns each ECU the appropriate software identifier (SWID) for identifying the ECU within the EE architecture.

In step 24, the update controller 9 transmits update data to each ECU for updating its software based on its assigned SWID for functioning in its installed location. That is, for example, the ECU 2a installed in the front-left of the vehicle may be identified as the front-left zonal controller based on its connections to other devices and ECUs. The update controller 9 then updates ECU 2a with the required rules and policies to behave as the front-left zonal controller. As such, the ECU 2a software is updated to receive and process input data from the associated camera, ultrasonic and LiDAR sensors in this region of the vehicle, as well as output control signals to the connected speakers and actuators. It will be understood that the update controller 9 may not need to install completely new ECU software, but rather may update settings and configuration information to activate specific functions appropriate for that ECU location. The update controller 9 may also update the ECU to record the vehicle's VIN.

In this way, standardised ECUs containing a base software platform may be installed into a vehicle and an initialisation step may be used as a discovery phase to allow each ECU to identify its neighbouring devices and location within the vehicle. The update server 9 may then download the appropriate software update to each ECU to allow the EE architecture to operate correctly. This thereby allows ECUs to be used in different vehicle models and locations within the vehicle.

Furthermore, the above system also allows a greater variety of other devices 7 to be used in conjunction with the ECUs. For example, different components and sub-components may be identified by the respective ECU in the initialisation phase and the updated ECU settings provided by update controller 9 may be selected for optimising operations with these particular components. The stored configuration data at the update controller 9 may also itself be updated to include new device drivers as new components become available. As such, greater flexibility within the EE architecture may be achieved.

The system also provides for assembly mistakes to be identified early and rectified. For example, if the specification data for a particular ECU indicates it is damaged or it is unsuitable for use in the location it has been installed, the update controller 9 can identify this based on the ECU infrastructure data stored in its memory. The identification of an invalid specification which does not match an intended target location can thereby be used to prompt the generation of an error report by the update controller 9. This may therefore provide early stage fault detection.

ECUs may also be easily replaced under the system. This may facilitate ECU components to be replaced in the event of a defect or upgraded as new technologies become available. In such a scenario, the existing ECU may be removed, and a new replacement ECU may be substituted in its place. The new ECU may then be activated to begin the configuration process. As with the process shown in Figure 3, the new ECU undertakes an initialisation step and outputs diagnostic data to the update controller 9, which then updates the new ECU with the appropriate software settings for its installed location, along with the associated SWID and VIN. This update process may be protected by a security protocol available to only authorised car dealerships to ensure integrity of the ECU operating systems.

It will be understood that the embodiments illustrated above show applications only for the purposes of illustration. In practice, embodiments may be applied to many different configurations, the detailed embodiments being straightforward for those skilled in the art to implement.

## Claims

1. A method of configuring an automotive controller within an EE architecture comprising:
connecting the automotive controller to other components within the EE architecture via one or more I/O ports in the automotive controller;
activating an initialisation process in a controller processor in the automotive controller in which the automotive controller determines diagnostic data for identifying other components connected to it within the EE architecture;
transmitting the diagnostic data by the controller processor from the automotive controller to an update controller;
assigning an identifier to the automotive controller by an update processor in the update controller based on a location within the EE architecture determined from the diagnostic data; and
updating software stored in a memory in the automotive controller based on the determined location.

2. A method according to claim 1, wherein the diagnostic data further includes specification data indicating specification parameters for the automotive controller.

3. A method according to claim 1 or 2, wherein the step of updating software in the automotive controller comprises storing the assigned identifier in the memory of the automotive controller.

4. A method according to any preceding claim, wherein the step of transmitting the diagnostic data from the automotive controller to the update controller comprises the controller processor performing a security handshake with the update processor for establishing secure data transmission between the automotive controller and the update controller.

5. A method according to any preceding claim, wherein the step of updating software in the memory of the automotive controller comprises the controller processor downloading software update data from an update data store at the update controller to the memory in the automotive controller.

6. A method according to any preceding claim, further comprising the step of the update processor of the update controller reporting an error if the received diagnostic data from the automotive controller does not correspond to valid diagnostic data stored in a EE architecture data store of the update controller.

7. An automotive controller comprising:
one or more I/O ports;
a processor;
a memory for storing instructions for execution by the processor, the instructions comprising:
instructions for implementing an initialisation process in which the automotive controller determines diagnostic data for identifying other components connected to it within the EE architecture through the one or more I/O ports, and
instructions for transmitting the diagnostic data to an update controller,
instructions for receiving an assigned identifier from the update controller,
instructions for receiving software update data from the update controller, wherein the software update data is based on a location within the EE architecture determined from the diagnostic data; and
instructions for updating software in the automotive controller using the assigned identifier and software update data.

8. An automotive controller according to claim 7, wherein the one or more I/O ports comprise a plurality of I/O ports for connection to other components within the EE architecture.

9. An automotive controller according to claim 7, wherein the one or more I/O ports comprise one or more I/O hub ports for connection to an I/O hub that connects to other components within the EE architecture.

10. An automotive controller system, comprising:
a plurality of automotive controllers and devices connected in an EE architecture;
an update controller for establishing a data connection to one or more of the automotive controllers;
wherein the one or more of the automotive controllers are configured to activate an initialisation process for determining diagnostic data identifying other components connected to it within the EE architecture and transmit the diagnostic data to the update controller, and
wherein the update controller is configured to determine a location within the EE architecture for each of the one or more automotive controllers based on the diagnostic data, and then assign and transmit a respective identifier and software update data based on the determined location for updating the respective automotive controller.

11. An automotive controller system according to claim 10, wherein the one or more of the automotive controllers are standardised and comprise a memory storing instructions for execution by a processor, the instructions comprising:
instructions for implementing an initialisation process in which the respective automotive controller determines diagnostic data for identifying other components connected to it within the EE architecture;
instructions for transmitting the diagnostic data to the update controller;
instructions for receiving an assigned identifier from the update controller;
instructions for receiving software update data from the update controller, wherein the software update data is based on a location within the EE architecture determined from the diagnostic data; and
instructions for updating software in the automotive controller using the assigned identifier and software update data.

12. A non-transitory computer readable medium comprising instructions stored therein for execution by a processor within an automotive controller, the instructions comprising:
instructions for implementing an initialisation process in which the automotive controller determines diagnostic data for identifying other components connected to it within an EE architecture through one or more I/O ports;
instructions for transmitting the diagnostic data to an update controller;
instructions for receiving an assigned identifier from the update controller;
instructions for receiving software update data from the update controller, wherein the software update data is based on a location within the EE architecture determined based on the diagnostic data; and
instructions for updating software in the automotive controller using the assigned identifier and the software update data.

13. A non-transitory computer readable medium comprising instructions stored therein for execution by a processor within an update controller, the instructions comprising:
instructions for receiving diagnostic data from an automotive controller, the diagnostic data for identifying other components connected to the automotive controller within an EE architecture through one or more I/O ports;
instructions for determining a location of the automotive controller within the EE architecture based on the diagnostic data;
instructions for assigning an identifier to the automotive controller based on the determined location; and
instructions for transmitting software update data to the automotive controller based on the determined location for updating software in the automotive controller.
